# EUROPEAN PATENT APPLICATION

(11) **EP 4 737 706 A1**
(43) Date of publication of application: **06.05.2026**
(21) Application number: 24209854.9
(22) Date of filing: 30.10.2024
(51) Int. Cl.: F03D 1/06, F03D 80/00

(54) **SERRATED PANEL FOR A WIND TURBINE ROTOR BLADE**

(71) Applicant: Nordex Energy SE & Co. KG, 22419 Hamburg (DE)
(72) Inventor: Lipka, Thomas, 22419 Hamburg (DE); Dibbern, Adrian, 22419 Hamburg (DE); Sidorov, Gennady, 22419 Hamburg (DE); Rautmann, Christof, 22419 Hamburg (DE)
(74) Representative: Hauck Patent- und Rechtsanwälte PartmbB

(57) **Abstract**

A serrated panel for a trailing edge of a wind turbine rotor blade, the serrated panel comprising
• a plurality of teeth, each tooth having a tip, a base, two edges running from the tip to the base, a longitudinal axis, a pressure side surface and a suction side surface, and
• a plurality of vanes arranged side by side with a gap between adjacent vanes, each vane beginning at one of said edges and extending in a rearward direction, wherein each vane has a vane length, a vane width and a vane height, characterized in that
• the pressure side surfaces and/or the suction side surfaces of the teeth comprise wave elements beginning at or near one of the edges and extending in a forward direction, wherein each wave element has a crest which is aligned with one of the vanes and a wave element width which is larger than the vane width.

## Description

The invention relates to a serrated panel for the trailing edge of a wind turbine rotor blade.

These panels have been suggested for noise reduction in wind turbines. The panels are designed with a series of teeth placed along the trailing edge of the wind turbine rotor blade, which can help to reduce aerodynamic noise generated by the rotor blade. In particular, the serrations on the trailing edge of a wind turbine rotor blade change the local flow behavior at the trailing edge and the interaction of turbulent vortices with the trailing edge, thereby reducing the overall noise level produced by the wind turbine.

Studies have shown that the use of serrated panels can reduce the noise level of wind turbines significantly. This can help to make wind turbines more acceptable to local communities by reducing the impact of noise pollution.

WO 2022/135751 A1 shows a trailing edge panel for a wind turbine rotor blade. It comprises a base element and serrations extending from a rear end of the base element. On one side of the serrations, rib-shaped protruding elements are arranged along a longitudinal direction of the serrations. The protruding elements extend in a direction towards a leading edge of the wind turbine rotor blade beyond the rear end of the base element. The protruding elements may be shaped as a finlet or as a three-dimensional, cone-shaped structure.

WO 2022/205817 A1 shows a serrated panel having a base part and a plurality of serrations. The serrations are provided with secondary teeth. In an embodiment, one side of the serrated panel is provided with ribs ending on the secondary teeth.

EP 3 164 599 B1 shows a serrated panel having serrations and u-shaped vanes arranged along a longitudinal direction of the serrations.

EP 3 348 826 B1 shows a serrated panel having serrations and vanes arranged on both sides of the serrations along a longitudinal direction of the serrations. On one side of the panel, the vanes extend over an outer surface of an attachment section.

EP 3 696 402 B1 shows a serrated panel having a plurality of spine members forming a number of serrations. First and second sections of the spine members have different stiffnesses. Third sections of the spine members form a mounting plate.

EP 2 851 555 B1 shows a wind turbine rotor blade with a trailing edge provided with a number of serrations. One side of the serrations is provided with vanes.

EP 2 867 523 B1 shows a serrated panel for a wind turbine rotor blade having serrations provided with stiffening ribs.

EP 2 921 697 B1 shows a wind turbine rotor blade with an airfoil having a modified trailing edge. The trailing edge has either serrations or a profile forming a zig-zap-pattern when seen from behind the airfoil.

WO 2020/224737 A1 shows a wind turbine rotor blade provided with serrations projecting from a trailing edge and distinct fins projecting from a surface of the blade arranged upstream of the serrations.

From the document EP 3 268 605 B 1, a wind turbine rotor blade with a serrated panel having the features of the preamble of claim 1 has become known. Parts of the serrated panel are provided with ridges or fins.

Departing therefrom, it is an object of the invention to provide a serrated panel offering improved noise reduction.

This problem is solved by the serrated panel with the features of claim 1. Preferred aspects are given in the dependent claims.

The serrated panel for a trailing edge of a wind turbine rotor blade comprises:
- a plurality of teeth, each tooth having a tip, a base, two edges running from the tip to the base, a longitudinal axis, a pressure side surface and a suction side surface, and
- a plurality of vanes arranged side by side with a gap between adj acent vanes, each vane beginning at one of said edges and extending in a rearward direction, wherein each vane has a vane length, a vane width and a vane height, wherein
- the pressure side surfaces and/or the suction side surfaces of the teeth comprise wave elements beginning at or near one of the edges and extending in a forward direction, wherein each wave element has a crest which is aligned with one of the vanes and a wave element width which is larger than the vane width.

The serrated panel is designed for being integrated into or attached to a wind turbine rotor blade at a trailing edge of the wind turbine rotor blade. When the serrated panel is mounted to the wind turbine rotor blade, the teeth extend beyond the wind turbine rotor blade's trailing edge. In particular, the teeth may be arranged such that the bases of the teeth are substantially aligned with the trailing edge of the wind turbine rotor blade.

Each tooth has a tip and two edges running from the tip to one end of the base. The edges may be straight, giving the tooth a triangular shape. However, the edges may also include some curvature. The teeth are arranged side-by-side. The base may be formed by an imaginary, straight line which connects two forward ends of recesses formed between adjacent teeth. The longitudinal axis of a tooth extends from the base to the tip, and generally describes a longitudinal direction of the tooth. The longitudinal axis may in particular extend through a midpoint of the base. The point where the longitudinal axis bisects the base may also be shifted towards one side, for example when the tooth has an asymmetrical shape. The geometry of all the teeth may be the same, so that all teeth have the same width, length and shape. However, this is not required.

Each tooth has a pressure side surface and a suction side surface. In use, the air surrounding the wind turbine rotor blade passes these aerodynamic surfaces. The pressure side surface of the tooth will point to the same side as the pressure side of the wind turbine rotor blade. The suction side surface of the tooth will point to the same side as the suction side of the wind turbine rotor blade. The suction side surfaces of the teeth may be substantially flat, but they may also comprise some curvature and or/additional surface features. The pressure side surfaces may have a ridge aligned with the longitudinal axis and two adjacent planar surfaces running from the ridge to one of these two edges.

In addition to the teeth having the described basic geometry, the serrated panel includes a plurality of vanes extending from one of said edges in a rearward direction. The vanes provide the teeth with an additional aerodynamic function. For this reason, the vanes are sometimes referred to secondary aerodynamic elements, with the teeth referred to as primary aerodynamic elements.

In accordance with the invention, the pressure side surfaces and/or suction side surfaces of the teeth comprise wave elements. The wave elements begin at or near one of the edges and extend in a forward direction, that is opposite to the extension of the vanes. The vanes and the wave elements may be substantially aligned with the longitudinal axis of the respective tooth, or be arranged in parallel thereto. The wave elements provide a section of the pressure side surface (and/or of suction side surface) of each tooth near an edge with a wavy surface structure. The wave elements may cover a strip-shaped section of the pressure side surface (and/or of suction side surface) near an edge of the respective tooth, while the remainder of the pressure side surface (and/or of suction side surface) of the tooth may have a planar surface, free of any wave elements and/or free of any other surface features.

Each wave element has a crest which is arranged generally along a longitudinal direction of the wave element. The crest follows a line including those points of the wave element having the highest elevation above the basic geometry of the respective tooth. The crest of a wave element may be arranged in a plane that is arranged perpendicular to the suction side surface of the tooth and parallel to the longitudinal axis. Within this plane, the crest may be straight or curved.

The crest of each wave element is aligned with one of the vanes. The wave element has a width which is larger than the vane width. This means the wave elements are not just forward ends of the vanes extending from the edge in a forward direction, but are additional geometrical elements with a different cross-section. There may be exactly one wave element for each vane, but it is also possible that there are some vanes which do not have a wave element.

The position of the wave elements is adapted to the position of the vanes, so that each wave element influences the air flowing along the pressure side surface and/or of suction side surface towards an adjacent vane. In particular, the wave elements lead to a smooth flow of the air near the edge, so that less unwanted turbulences are created. Overall, significant flow optimization was obtained by means of the combination of the vanes and the specifically designed wave elements, leading to significantly less noise emission at the trailing edge.

In an aspect, the wave elements in cross-section have two sloped side surfaces, each having a first end arranged at the crest of the respective wave element and a second end arranged at the lowermost point between adjacent wave elements. The sloped side surfaces may be curved or straight as long as they form a slope. This means the sloped side surfaces do not include straight sections arranged parallel to the suction side surface. The wave element width can be defined as the distance between the lowermost points of the two sloped side surfaces. When seen in cross-section, the pressure side surface may include straight sections forming a valley between adjacent lowermost points. In this case, a width of the valley corresponds to the distance between adjacent wave elements. In an aspect, the two sloped side surfaces are curved and have a convex section at or near the first end and/or a concave section at or near the second end. Between the convex section and the concave section, the side surfaces may have an inflection point. In general, it is also possible that the two slide surfaces between the convex and concave sections include a straight, sloped section. Always seen in the cross-section, the two sloped side surfaces together may form a sinusoidal shape.

In an aspect, a tangent to the sloped side surface at the second end is arranged parallel to the suction side surface. This means the sloped side surfaces are concave until they reach a parallel arrangement with reference to the suction side surface. Similarly, a tangent to the sloped side surfaces at the first end may also be arranged parallel to the suction side surface. At the crest, the convex sections of the adjacent sloped side surfaces may transition into one another smoothly, whereas it is also possible to arrange a straight section between the convex sections.

In an aspect, the wave elements have a wave element height which is smaller than the wave element width, in particular by a factor of 1.5 or more. The wave element height may be defined as the vertical distance between the crest and the lowermost points of the adjacent sloped side surfaces. Such a relatively wide cross-section of the wave elements was found most helpful for achieving a smooth transition from the air coming from a planar, suction side surface of the respective tooth and proceeding towards the vanes.

In an aspect, the wave element height decreases in the forward direction, in particular such that a distance between the crest and the suction side surface is constant. In particular, when a thickness of the tooth decreases when proceeding from the base towards the edge, a smooth transition is obtained, with the wave elements slowly becoming more pronounced when proceeding towards the edge.

In an aspect, the crests of the wave elements at a front end of the respective wave element transition smoothly into the pressure side surface of the respective tooth. "To transition smoothly" means there is no gap, step or kink, so that that a smooth flow is obtained.

In an aspect, the vanes have a cross-section which is constant over their entire length or a largest part thereof. In particular, the vanes may have a planar suction side surface and a rounded pressure side surface. The vane height may be larger than the vane width, meaning the vanes have a relatively slender geometry as compared to the wave elements. In an aspect, the vanes in cross-section have straight side surfaces arranged along the direction of the vane height. In other words, the straight side surfaces of the vanes are arranged perpendicular to the suction side surface of the respective tooth.

In an aspect, the vane width corresponds to a width of the gap between each pair of adjacent vanes. This means, the vanes cover approximately 50% of the area provided with the vanes.

In an aspect, the serrated panel comprises a plurality of transition elements, wherein each transition element is arranged between one of the vanes and a wave element aligned therewith, wherein an outer surface of the transition element forms a smooth transition between the vane and the wave element.

In an aspect, each transition element has a curved crest with a front section smoothly transitioning in the crest of the wave element and a rear section smoothly transitioning in a crest of the vane. The front section may be concave. The rear section may be convex.

In an aspect, the serrated panel comprises an attachment section having a leading edge, an attachment surface for connecting the serrated panel to a trailing edge of a wind turbine rotor blade, a rear end, and an external surface opposite the attachment surface, wherein the bases of the teeth are arranged at the rear end. The attachment section can be connected to the wind turbine rotor blade in particular by means of an adhesive, for example in a liquid form or as an adhesive tape. The attachment section forms a front portion of the serrated panel. The front edge of the attachment section can be referred to as leading edge. The other end of the attachment section is the rear end. The plurality of teeth altogether forms a rear portion of the serrated panel.

In an aspect, some of the wave elements have a front end arranged on the external surface of the attachment section. These front ends of the wave elements provide a smooth transition to the vanes also in particular near the outermost portions of the teeth.

In the following, the invention is explained in greater detail based on drawings. The figures show:
- Fig. 1: a wind turbine rotor blade with a serrated panel in a perspective view,
- Fig. 2: a serrated panel in a top view,
- Fig. 3: a section of the serrated panel of Fig. 2 in a perspective view,
- Fig. 4: the serrated panel of Fig. 2 in a side view,
- Fig. 5: a section of the serrated panel of Fig. 2 in another side view,
- Fig. 6: the section of the serrated panel of Fig. 3 in a perspective view, cut along a transverse plane,
- Fig. 7: a section of Fig. 6 in an enlarged view, and
- Fig. 8: a tip end of a tooth with one vane in a perspective view.

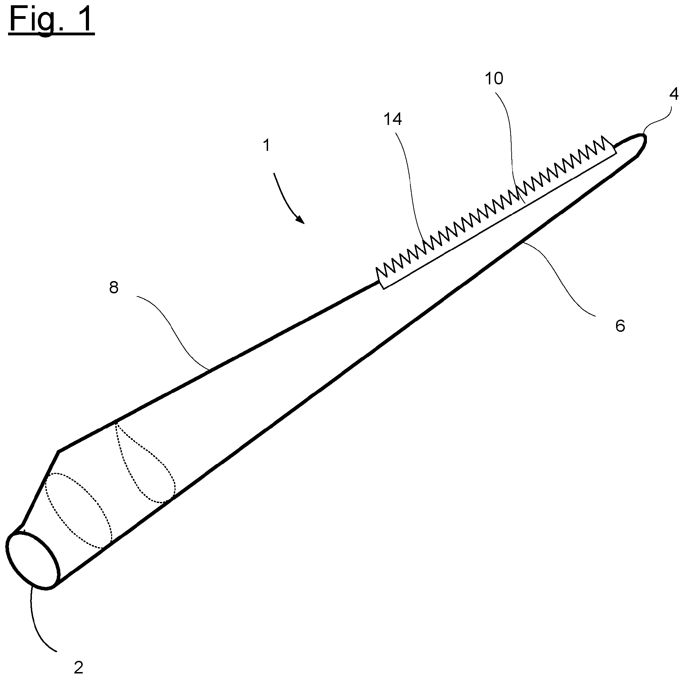

Figure 1 shows a wind turbine rotor blade 1 having a blade root 2, a blade tip 4, a leading edge 6 and a trailing edge 8. In cross-section, the wind turbine rotor blade 1 has an aerodynamic profile. The spanwise direction extends from the blade root 2 towards the blade tip 4. The chordwise direction extends perpendicular to the spanwise direction from the leading edge 6 towards the trailing edge 8.

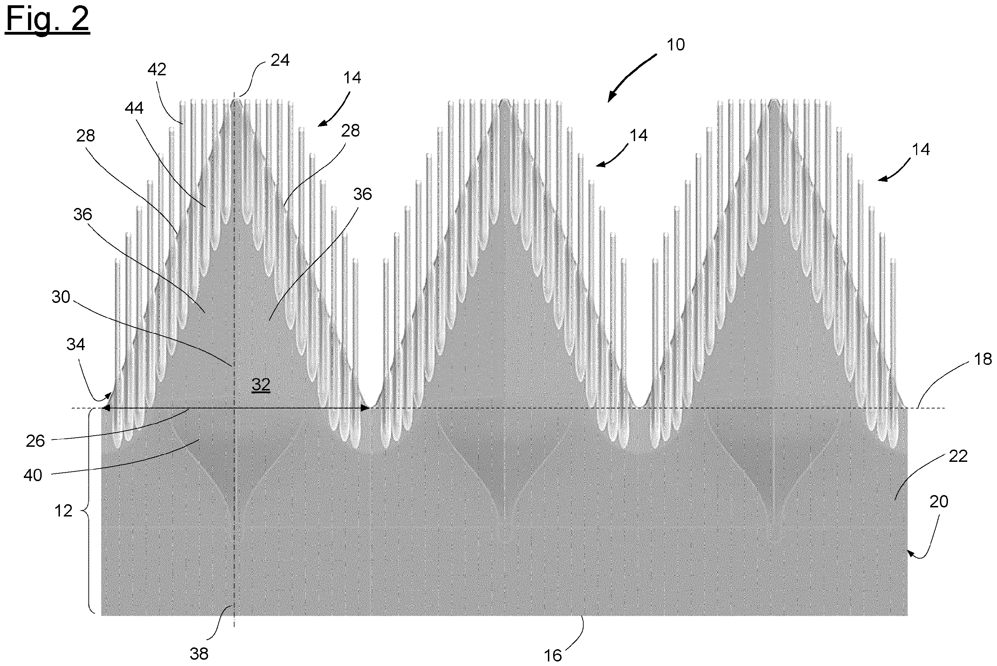

An outer length section of the wind turbine rotor blade is provided with a serrated panel 10, which is attached to an outer surface of the wind turbine rotor blade 1 and has a plurality of teeth 14. The serrated panel 10 is positioned such that the bases 26 (see Fig. 2) of the teeth 22 are aligned with the trailing edge 8.

The serrated panel 10 of Fig. 2 has an attachment section 12 and a plurality of teeth 14. The attachment section 12 has a leading edge 16 and a rear end 18 indicated by a dashed line. At the back of the attachment section 12, away from the viewer, the attachment section 12 has an attachment surface 20 extending over the entire back of the attachment section 12. The outer surface of the attachment section 12 facing the viewer forms an external surface 22.

Each of the teeth 14 has a tip 24 and a base 26 indicated in Fig. 2 by a double arrow. The base 26 is disposed at the rear end 18 of the attachment section 12, where the attachment section 12 transitions into the teeth 14. Each tooth 14 further has two side edges 28, each running from the tip 24 to one end of the base 26. The side of the teeth 14 facing the viewer in Fig. 2 is a pressure side surface 32, the side facing away from the viewer is a suction side surface 34. The pressure side surface 32 is divided into two planar surfaces 36 by a ridge 30 formed along a longitudinal axis 38 of the tooth 14. The planar surfaces 36 extend from the ridge 30 to the respective side edge 28.

The external surface 22 for each tooth 14 comprises a transition surface 40 forming a transition between the leading edge 16 and the pressure side surface 32 of the respective tooth 14.

A plurality of vanes 42 extend from one of the side edges 28 in a rearward direction, parallel to the longitudinal axis 38. In the opposite direction, beginning at the side edge 28 and extending from there in a forward direction, the suction side surface 32 of the teeth 14 is provided with a plurality of wave elements 44. These are also arranged parallel with the longitudinal axis 38.

We note the lines drawn within the boundary lines of the serrated panel 10 in Fig. 2 and the remaining Figs. originate from a CAD model describing the surface topology. These lines do not necessarily correspond to visible edges of the serrated panel 10.

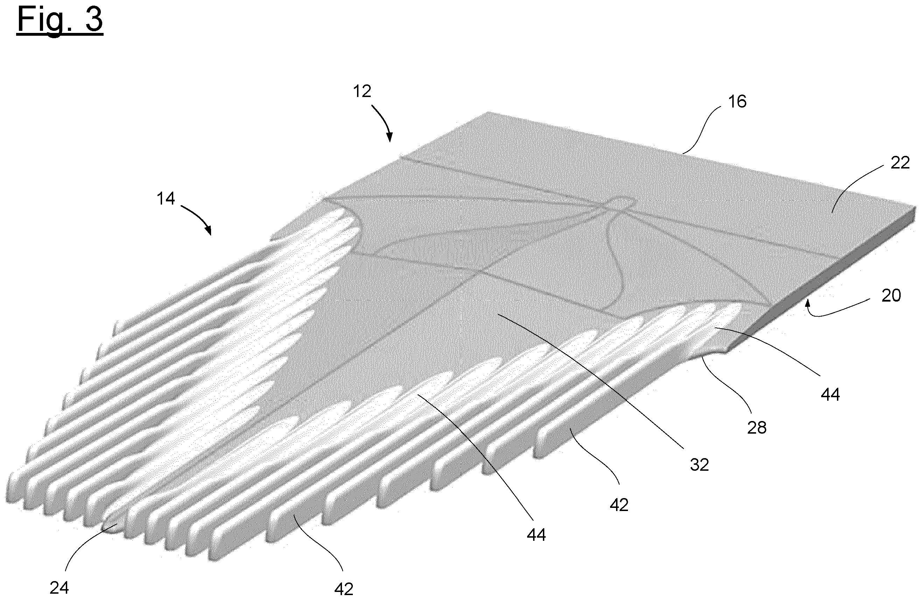

Figure 3 shows a perspective view of a section of the serrated panel 10 of Fig. 2 including one tooth 14 only. The elements explained to with reference to Fig. 2 are provided with the same reference numerals. One can see that each vane 42 has a free end located in a distance rearward from one of the side edges 28, and that all vanes 42 have the same cross section. The wave elements 44 provide a strip-shaped section of the pressure side surface 32 with a wavy structure. Each wave element 44 is aligned with one of the vanes 42.

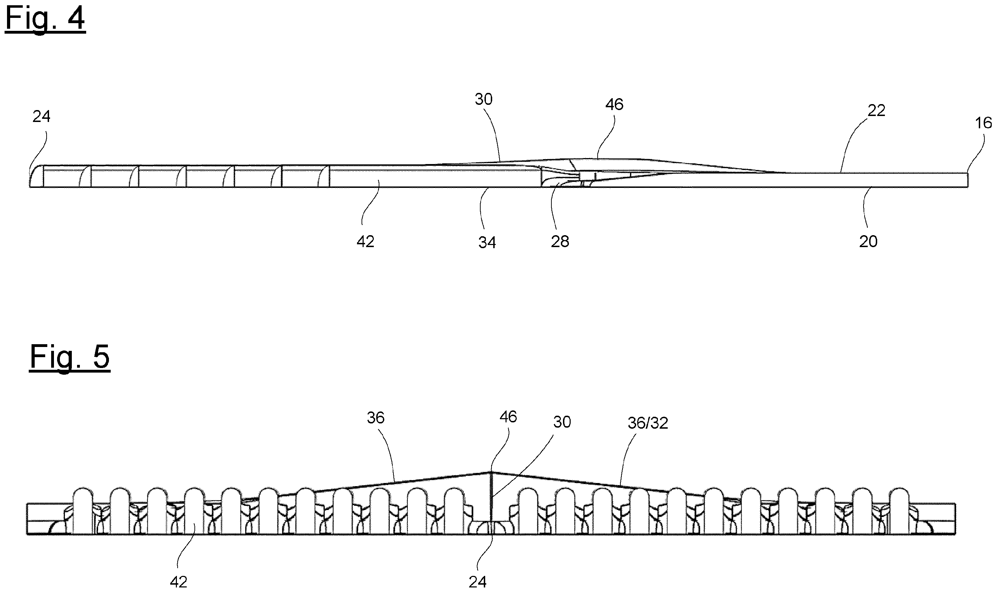

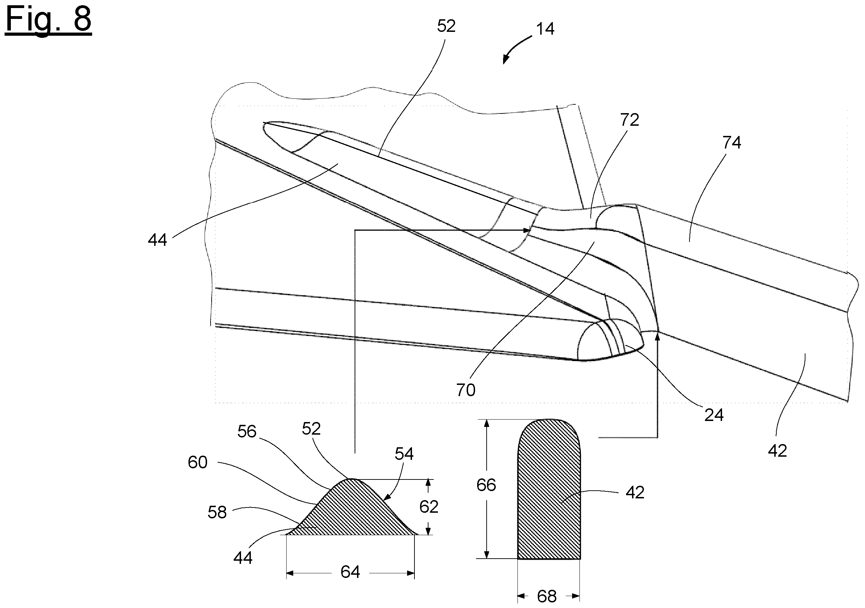

In the side view of Fig. 4, one can see that all of the vanes 42 are arranged in the plane of the suction side surface 34 of the tooth 14. A thickness of the serrated panel 10 is relatively small at the leading edge 16, and increases towards the base of the tooth 14, where the tooth 14 forms an apex 46. When following the tooth from the apex 46 along the longitudinal axis 38 towards the tip 24, the thickness of the tooth 14 continuously decreases along the ridge 30, so that the tooth 14 becomes thinner than a vane height 48 (see Fig. 8).

In Fig. 5, the view is directed along the longitudinal axis 38 on the free ends of the vanes 42. One can see the triangular cross section of the pressure side surface 32 of the tooth forming the apex 46. The vanes 42 are arranged side by side, with constant distances between neighboring vanes 42. The distances correspond to the vane widths 50 (see Fig. 8). At the tip 24 of the tooth 14, no vane 42 is formed. Instead, the tip 24 is aligned with the free ends of the neighboring vanes 42 (see Figs. 2 and 3).

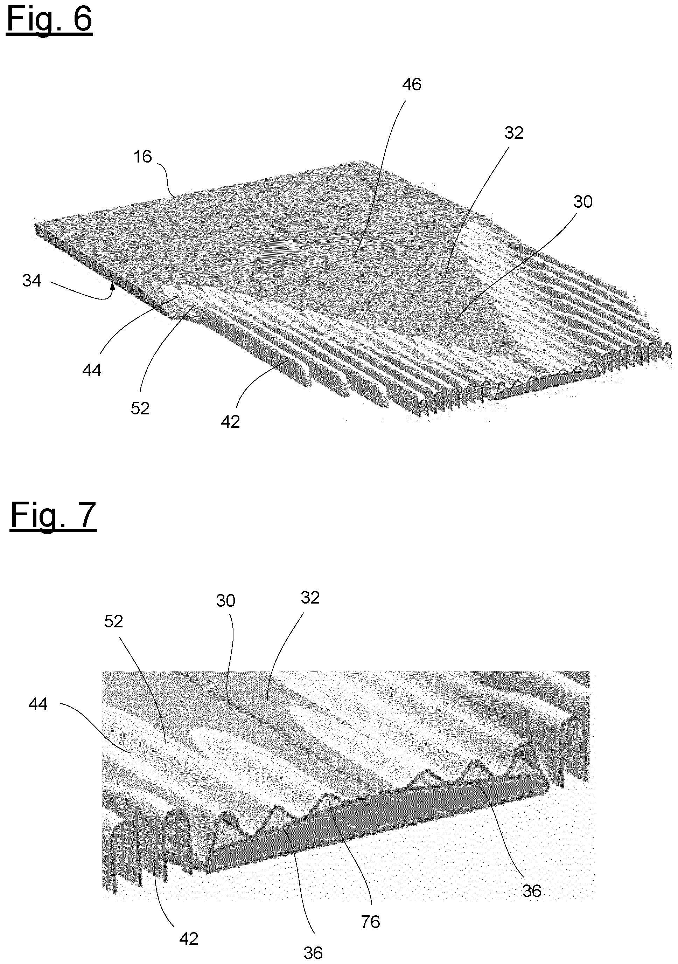

Fig. 6 and in particular the enlarged view of Fig. 7 show the geometry of the wave elements 44 more clearly. Each wave element 44 has a crest 52 which is aligned with a midline of an adjacent vane 42. The crest 52 has a constant distance from the suction side surface 34 of the tooth 14, so that a wave element height 62 (see Fig. 8) of the wave element 44, measured above the pressure side surface 32 of the tooth 14, decreases in the forward direction, until the wave element 44 at its forward end converges into the pressure side surface 32.

In the cross sectional plane shown in Figs. 6 and 7, the planar surfaces 36 of the pressure side surface 32 are shown by a line and the surface contour 76 of the wave elements 44 is also shown a line. This is only to better illustrate the basic geometry of the tooth 14 and those parts of the cross section added by the wave elements 44.

Figure 8 shows only a section of the serrated panel 10 near the tip 24 of one tooth 14. Only one wave element 44 and one vane 42 is shown.

To the bottom left of Fig. 8, a cross section through the wave element 44 at its rear end is shown. The wave element 44 has a crest 52 and two sloped side surfaces 54. Each sloped side surface 54 begins with a convex section 56 at the crest 52 transitioning into a concave section 58 at an inflection point 60. The wave element 44 has a wave element height 62 and a wave element width 64.

To the bottom right of Fig. 8, a cross section through the vane 42 is shown. This cross section is constant along the entire length of the vane 42. It is drawn at the same scale as the cross section through the wave element 44. The vane height 66 is more than twice as large as the wave element height 62. The vane width 68 is smaller than the wave element width 64.

A transition element 70 is arranged between the vane 42 and the wave element 44. An outer surface of the transition element 70 forms a smooth transition between the vane 42 and the wave element 44. The transition element 70 has a curved crest 72 with a front section smoothly transitioning in the crest 52 of the wave element 44 and a rear section smoothly transitioning in a crest 74 of the vane 42.

### List of reference numerals

- 1: wind turbine rotor blade
- 2: blade root
- 4: blade tip
- 6: leading edge
- 8: trailing edge
- 10: serrated panel
- 12: attachment section
- 14: tooth
- 16: leading edge
- 18: rear end
- 20: attachment surface
- 22: external surface
- 24: tip
- 26: base
- 28: side edge
- 30: ridge
- 32: pressure side surface
- 34: suction side surface
- 36: planar surface
- 38: longitudinal axis
- 40: transition surface
- 42: vane
- 44: wave element
- 46: apex
- 48: vane height
- 50: vane width
- 52: crest (of wave element 44)
- 54: sloped side surface
- 56: convex section
- 58: concave section
- 60: inflection point
- 62: wave element height
- 64: wave element width
- 66: vane height
- 68: vane width
- 70: transition element
- 72: crest (of transition element 70)
- 74: crest (of vane 42)
- 76: surface contour

## Claims

1. A serrated panel (10) for a trailing edge of a wind turbine rotor blade, the serrated panel (10) comprising
• a plurality of teeth (14), each tooth (14) having a tip (24), a base (25), two edges (28) running from the tip (24) to the base (26), a longitudinal axis (38), a pressure side surface (32) and a suction side surface (34), and
• a plurality of vanes (42) arranged side by side with a gap between adjacent vanes (42), each vane (42) beginning at one of said edges (28) and extending in a rearward direction, wherein each vane (42) has a vane length, a vane width (68) and a vane height (66), **characterized in that**
• the pressure side surfaces (32) and/or the suction side surfaces (34) of the teeth (14) comprise wave elements (44) beginning at or near one of the edges (28) and extending in a forward direction, wherein each wave element (44) has a crest (52) which is aligned with one of the vanes (42) and a wave element width (64) which is larger than the vane width (68).

2. The serrated panel (10) of claim 1, wherein the wave elements (44) in cross section have two sloped side surfaces (54) each having a first end arranged at the crest (52) of the respective wave element (44) and a second end arranged at a lowermost point between adjacent wave elements (44).

3. The serrated panel (10) of claim 2, wherein the two sloped side surfaces (54) are curved and have a convex section (56) at or near the first end and/or a concave section (58) at or near the second end.

4. The serrated panel (10) of claim 2, wherein a tangent to the sloped side surface (54) at the second end is arranged parallel to the suction side surface (34).

5. The serrated panel (10) of any of the claims 1 to 4, wherein the wave elements (44) have a wave element height (62) which is smaller than the wave element width (64), in particular by a factor of 1.5 or more.

6. The serrated panel (10) of claim 5, wherein the wave element height (62) decreases in the forward direction, in particular such that a distance between the crest (52) and the suction side surface (34) is constant.

7. The serrated panel (10) of any of the claims 1 to 6, wherein the crests (52) of the wave elements (44) at a front end of the respective wave element transition smoothly into the pressure side surface (32) of the respective tooth (14).

8. The serrated panel (10) of any of the claims 1 to 7, wherein the vanes (42) have a cross-section which is constant over their entire length or a largest part thereof.

9. The serrated panel (10) of any of the claims 1 to 8, wherein the vanes (42) in cross-section have straight side surfaces arranged along the direction of the vane height (66).

10. The serrated panel (66) of any of the claims 1 to 9, wherein the vane width (68) corresponds to a width of the gap between each pair of adjacent vanes (42).

11. The serrated panel (10) of any of the claims 1 to 10, wherein the serrated panel (10) comprises a plurality of transition elements (70), wherein each transition element (70) is arranged between one of the vanes (42) and a wave element (44) aligned therewith, wherein an outer surface of the transition element (70) forms a smooth transition between the vane (42) and the wave element (44).

12. The serrated panel (10) of claim 11, wherein each transition element (70) has a curved crest (72) with a front section smoothly transitioning in the crest (52) of the wave element (44) and a rear section smoothly transitioning in a crest (74) of the vane (42).

13. The serrated panel (10) of any of the claims 1 to 12, wherein the serrated panel (10) comprises an attachment section (12) having a leading edge (16), an attachment surface (20) for connecting the serrated panel (10) to a trailing edge of a wind turbine rotor blade, a rear end (18), and an external surface (22) opposite the attachment surface (20), wherein the bases (26) of the teeth (14) are arranged at the rear end (18).

14. The serrated panel (10) of claim 13, wherein some of the wave elements (44) have a front end arranged on the external surface (22) of the attachment section (12).
